# EUROPÄISCHE PATENTANMELDUNG

(11) **EP 2 048 385 A1**
(43) Veröffentlichungstag der Anmeldung: **15.04.2009**
(21) Anmeldenummer: 07019974.0
(22) Anmeldetag: 11.10.2007
(51) Int. Cl.: F16C 9/00, F16C 33/74

(54) **Lageranordnung**

(71) Anmelder: Carl Freudenberg KG, 69469 Weinheim (DE)
(72) Erfinder: Bock, Eberhard, 69509 Mörlenbach (DE); Gramlich, Martin, 69493 Hirschberg (DE)

(57) **Zusammenfassung**

Lageranordnung (1) zur Lagerung einer Welle (2) in einem Gehäuse (3), wobei in dem Gehäuse (3) zumindest eine schalenförmige Lagerfläche (4) ausgebildet ist auf der die Welle (2) positionierbar ist, wobei sich zwischen Lagerfläche (4) und Welle (2) ein Spalt (5) ausbildet und wobei in dem Spalt (5) wenigstens ein Drosselelement (6) vorgesehen ist.

## Beschreibung

### Technisches Gebiet

Die Erfindung betrifft eine Lageranordnung zur Lagerung einer Welle in einem Gehäuse.

### Stand der Technik

Wellen von Verbrennungsmotoren werden meist in Gleitlagern gelagert. Ein Gleitlager umfasst eine Lagerfläche, die zumindest teilweise die zu lagernde Welle umschließt, wobei sich zwischen Lagerfläche und Welle ein Spalt ergibt in dem sich ein Schmiermittel befindet. Diese Schmiermittel können durch Bohrungen, Nute oder andere Ausnehmungen in der Lagerfläche oder auch in der Welle in den Spalt gelangen. Der Spalt der Lageranordnung ist durch unterschiedliche Wärmeausdehnungskoeffizienten von Gehäuse und Welle Schwankungen unterworfen. Dabei führt ein zu großer Spalt zu einem unerwünscht großen Abfluss des Schmiermittels aus der Lageranordnung, was zu einem Abreißen des Schmierfilms in dem Spalt führen kann und damit zu einem vorzeitigen Verschleiß der Lageranordnung. Ein derartiges Problem ergibt sich insbesondere bei der Verwendung von Leichtmetall bei der Konstruktion des Gehäuses, da sich der Wärmeausdehnungskoeffizient von Leichtmetall von dem Wärmeausdehnungskoeffizienten von Stahl, dem meist für Wellen verwendeten Werkstoff für Stahl unterscheidet. Die Lagerung von Wellen, die nicht so starken Belastungen wie die Kurbelwelle unterworfen sind, soll möglichst einfach und unter Verwendung weniger Teile erfolgen.

### Darstellung der Erfindung

Der Erfindung liegt die Aufgabe zugrunde, eine Lagerungsanordnung zur Lagerung einer Welle in einem Gehäuse bereitzustellen, die einfach und kostengünstig herstellbar ist.

Diese Aufgabe wird mit den Merkmalen von Anspruch 1 gelöst. Auf vorteilhafte Ausgestaltungen nehmen die Unteransprüche Bezug.

Zur Lösung der Aufgabe wird eine Lageranordnung zur Lagerung einer Welle in einem Gehäuse vorgeschlagen, wobei in dem Gehäuse zumindest eine schalenförmige Lagerfläche ausgebildet ist auf der eine Welle positionierbar ist, wobei sich zwischen Lagerfläche und Welle ein Spalt ausbildet und wobei in dem Spalt wenigstens ein Drosselelement vorgesehen ist. Erfindungsgemäß ist die Lagerfläche direkt in das Gehäuse integriert. Dazu wird in dem Gehäuse ein Lagerstuhl ausgebildet und die der Welle zugewandten Flächen werden so bearbeitet, dass sie die Lagerflächen bilden. Der Lagerstuhl mit der Lagerfläche ist somit materialeinheitlich und einstückig mit dem Gehäuse ausgebildet. Erfindungsgemäß wird auf die Verwendung von Lagerschalen verzichtet, so dass sich eine teilearme und kostengünstig herstellbare Lageranordnung ergibt. Diese Lageranordnung ist insbesondere zur Lagerung von Wellen geeignet, die nicht so mechanisch belastet sind wie die Kurbelwelle eines Verbrennungsmotors. Derartige Wellen sind beispielsweise die Nockenwelle oder die Ausgleichswelle eines Verbrennungsmotors oder diverse Wellen eines Getriebes. Da das Gehäuse, welches hier einen Teil der Lageranordnung bildet, häufig aus Leichtmetall gefertigt ist, die Wellen jedoch vorzugsweise aus einer Stahllegierung, ist in dem Spalt zwischen Lagerfläche und Welle ein Drosselelement vorgesehen. Dieses begrenzt den Strom des Schmiermittels und verhindert bei höheren Temperaturen, wenn sich die Spalthöhe vergrößert hat, den Abfall des Schmiermitteldrucks in der Lageranordnung und verhindert somit auch ein Abreißen des Schmierfilms, der sich in dem Spalt befindet.

Es können zwei Drosselelemente je Lagerfläche vorgesehen sein, die jeweils einem Rand der Lagerfläche zugeordnet sind. Dadurch ist der Spalt, der sich zwischen Lagerfläche und Welle bildet, beidseitig durch ein Drosselelement begrenzt.

In der Lagerfläche kann zumindest eine Ausnehmung vorgesehen sein, in denen das Drosselelement angeordnet ist. In der Ausnehmung ist das Drosselelement gekammert und somit fixiert. Die Ausnehmung kann so ausgestaltet sein, dass das Drosselelement mit Spiel darin gelagert ist und das Schmiermittel vorzugsweise zwischen Ausnehmung und Drosselelement den Spalt passiert. Diese Ausgestaltung ermöglicht ein Ausdehnen des Drosselelementes in radialer Richtung. Vorzugsweise ist die Ausnehmung als zumindest teilweise in der Lagerfläche umlaufende Nut ausgebildet.

Das Drosselelement kann wenigstens teilkreisförmig ausgebildet sein. Lageranordnungen weisen häufig nur auf einem Halbkreis eine Konturierung der Lagerfläche auf. Dabei wird die Lagerfläche konturiert, die der Hauptbelastungsrichtung zugewandt ist und die daher nicht so stark belastet ist, wie die andere Lagerfläche die auf der der Hauptbelastungsrichtung abgewandten Seite angeordnet ist. Unter Konturierung ist hier die Anordnung von Ausnehmungen und Einrichtungen zur Versorgung der Lageranordnung mit Schmiermittel zu verstehen. Unter Belastung ergibt sich auf der Lagerfläche, die der Hauptbelastung gegenüber liegt ein größerer Spalt. Daher wird vorzugsweise hier ein Drosselelement angeordnet, welches den Schmiermittelstrom begrenzt. Dazu kann das Drosselelement vorzugsweise halbkreisförmig ausgebildet sein.

Das Drosselelement kann ringförmig ausgebildet sein. Derartige Drosselelemente umschließen die Welle vollständig und sind insbesondere bei Wellen mit wechselnder Belastungsrichtung vorteilhaft.

Das Drosselelement kann als Rechteckring ausgebildet sein. Rechteckringe sind einfach und kostengünstig herstellbar.

Das Drosselelement kann auf der Welle relativ drehbar zu den Ausnehmungen angeordnet sein. Dazu weist das Drosselelement vorzugsweise einen Schlitz auf, so dass es zum Montieren auf der Welle aufgeweitet werden kann. Nach der Montage ist das Drosselelement drehfest auf der Welle angeordnet und schwimmend in der Ausnehmung gelagert. Der Schmiermittelstrom erfolgt in dem sich ergebenden Spalt zwischen Ausnehmung und Drosselelement. Bei dieser Ausgestaltung ist vorteilhaft, dass sich das Drosselelement in radialer Richtung und je nach Breite der Ausnehmung auch in axialer Richtung bewegen und ausdehnen kann. Die Spaltbreite in der axialen Richtung, also zwischen Seitenwänden der Ausnehmung und Drosselelement werden durch den Schmiermitteldruck bestimmt.

Das Drosselelement kann außen- und/oder innenumfangsseitig zumindest eine Erhebung und/oder Vertiefung aufweisen. Die Grundgestalt des Drosselelementes ist dabei ein Rechteckring, ausgebildet als Vollkreis oder Teilkreis, beispielsweise Halbkreis. Vorteilhafte Ausgestaltungen des Drosselelementes weisen außenumfangsseitig etwa mittig eine Vertiefung oder eine Erhebung auf. Die Vertiefung oder Erhebung kann kreisförmig ausgestaltet sein. In einer weiteren vorteilhaften Ausgestaltung weist das Drosselelement außenumfangsseitig und innenumfangsseitig eine Vertiefung auf. Durch diese Profilierung kann das zu der Vertiefung benachbarte Material oder die Erhebung selbst bei Druckbeanspruchung, beispielsweise aufgrund von Dehnungen des Drosselelementes in dem begrenzten Bauraum in radialer Richtung auf die benachbarten freien Bereiche ausweichen und so einen Spannungsabbau bewirken. Vorzugsweise wird ein Werkstoff gewählt, der sich unter Druck und Temperatur plastisch verformt. Durch die Materialauswahl und die Formgebung des Drosselelementes ist es dann möglich, dass sich der optimale Schmiermittelstrom nach einer kurzen Einlaufzeit dauerhaft einstellt. Denkbare Werkstoffe für das Drosselelement sind vorzugsweise Polymere, insbesondere aus Polytetrafluorethylen (PTFE-Compounds), Polyetherketon (PEEK), Polyamidimid PAI und Polyimid. Diese vorteilhafte Wirkung des zuvor beschriebenen Drosselelementes ist dabei nicht auf die hier beschriebene Lageranordnung beschränkt, derartige Drosselelemente sich vielmehr in allen denkbaren mit Drosselelementen ausgerüsteten Gleitlagern vorteilhaft einsetzbar.

Dem Drosselelement kann ein Federelement zugeordnet sein, welches das Drosselelement an die Welle andrückt. Dazu kann das Federelement direkt und vorzugsweise außenumfangsseitig an das Drosselelement angreifen. In anderen Ausgestaltungen kann das Federelement auch indirekt an das Drosselelement angreifen. Das Federelement bewirkt eine gleich bleibende Anpressung des Drosselelementes unabhängig von dem hydrodynamischen und statischen Schmiermitteldruck. So liegt das Drosselelement beispielsweise auch beim Anfahrvorgang der Welle immer an der Welle an. Darüber hinaus kann das Drosselelement von dem Einfluss des hydrodynamischen Drucks entkoppelt werden. Die Entkopplung kann durch bauliche Anpassung oder ein separates Bauteil erfolgen. Die Entkopplung kann derart erfolgen, dass der hydrodynamische Schmiermitteldruck nur an der Flanke angreift.

Es kann eine Einrichtung zum Zuführen von Schmiermittel vorgesehen sein. Die Einrichtung kann als Bohrung ausgebildet sein, die in der Lagerfläche oder auch in der Welle, vorzugsweise zwischen zwei Drosselelementen mündet. Zusätzlich zu der Bohrung kann auch eine Nut vorgesehen sein, in der das durch die Bohrung zugeführte Schmiermittel in dem Zwischenraum zwischen den Drosselelementen, der Lagerfläche und der Welle verteilt wird.

Verwendung der Lageranordnung nach einem der vorherigen Ansprüche zur Lagerung von Nockenwellen, Ausgleichswellen, Schaltwellen oder Getriebewellen. Die oben beschriebene Lageranordnung eignet sich insbesondere zur Lagerung der zuvor beschriebenen Wellen, da diese nicht solchen Belastungen unterworfen ist, wie eine Kurbelwelle. Sie sollen daher aus Kostengründen auch einfacher ausgeführt werden.

### Kurzbeschreibung der Zeichnung

Einige Ausführungsbeispiele der erfindungsgemäßen Lageranordnung werden durch die nachfolgenden Figuren näher erläutert. Diese zeigen, jeweils schematisch:
- Fig. 1: eine erfindungsgemäße Lageranordnung;
- Fig. 2: einige Ausführungsbeispiele von Drosselelementen.

### Ausführung der Erfindung

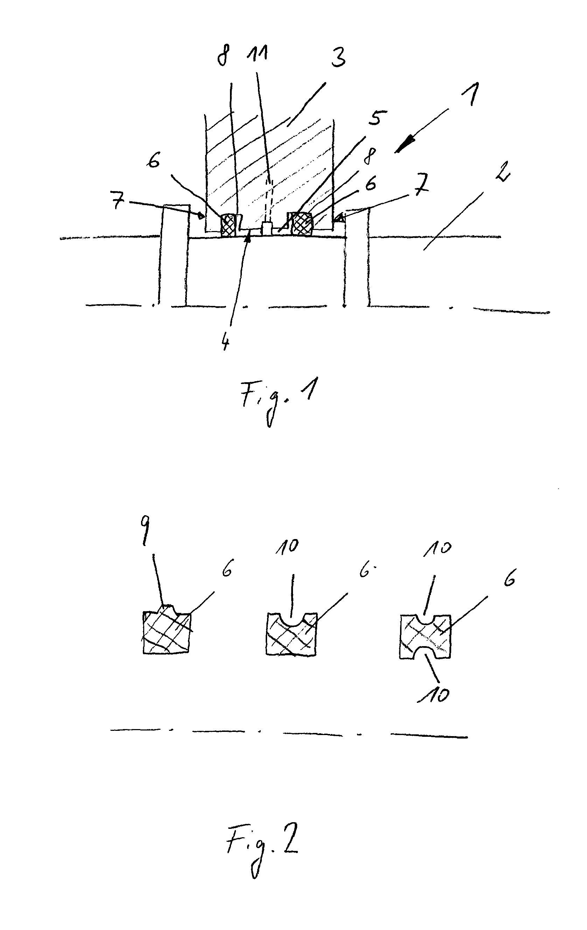

Figur 1 zeigt eine Lageranordnung 1 zur Lagerung einer Welle 2 in einem Gehäuse 3. In dem Gehäuse 3 ist direkt eine schalenförmige Lagerfläche 4 ausgebildet auf der die Welle 2 drehbar gelagert ist. Zwischen Lagerfläche 4 und Welle 2 bildet sich im Betrieb durch den hydrodynamischen Druck des Schmiermittels und unter Umständen durch weitere Einflüsse, beispielsweise Federkräfte, ein Spalt 5 aus. Zur Begrenzung des Schmiermittelstroms sind in dem Spalt 5 zwei Drosselelemente 6 vorgesehen, die jeweils einem Rand 7 der Lagerfläche 4 zugeordnet sind. Die Drosselelemente 6 sind in Ausnehmungen 8 geführt und fixiert die in der Lagerfläche 4 vorgesehen sind. In dieser Ausgestaltung sind die Drosselelemente 6 halbkreisförmig als Rechteckring ausgebildet. In einer anderen Ausgestaltung sind die Drosselelemente 6 ausgebildet und auf der Welle 2 relativ drehbar zu den Ausnehmungen 8 angeordnet. Zwischen den Drosselelementen 6 ist in dem Spalt 5 eine Einrichtung 11 zum Zuführen von Schmiermittel vorgesehen. Diese Lageranordnung 1 eignet sich insbesondere zur Lagerung von Nockenwellen, Ausgleichswellen, Schaltwellen oder Getriebewellen.

Figur 2 zeigt verschiedenen Ausführungen eines Drosselelementes welches neben der oben beschriebenen Lageranordnung 1 auch zum Einsatz in anderen Gleitlageranordnungen denkbar ist. Das Drosselelement 6 ist in der Grundform als Rechteckring ausgebildet, wobei das Drosselelement kreisförmig sein kann oder auch nur einen Teilkreis, beispielsweise einen Halbkreis beschreiben kann. Das Drosselelement besteht aus einem polymeren Werkstoff, beispielsweise einem PTFE, PEEK oder PAI. In der ersten Ausgestaltung weist das Drosselelement 6 außenumfangsseitig eine trapezförmige Erhebung 9 auf. In der zweiten Ausgestaltung weist das Drosselelement 6 außenumfangsseitig eine halbkreisförmige Vertiefung 10 auf und in der dritten Ausführung weist das Drosselelement 6 außenumfangsseitig und innenumfangsseitig jeweils eine halbkreisförmige Vertiefung 10 auf.

## Patentansprüche

1. Lageranordnung (1) zur Lagerung einer Welle (2) in einem Gehäuse (3), wobei in dem Gehäuse (3) zumindest eine schalenförmige Lagerfläche (4) ausgebildet ist auf der die Welle (2) positionierbar ist, wobei sich zwischen Lagerfläche (4) und Welle (2) ein Spalt (5) ausbildet und wobei in dem Spalt (5) wenigstens ein Drosselelement (6) vorgesehen ist.

2. Lageranordnung nach Anspruch 1, **dadurch gekennzeichnet, dass** zwei Drosselelemente (6) vorgesehen sind die jeweils einem Rand (7) der Lagerfläche (4) zugeordnet sind.

3. Lageranordnung nach Anspruch 1 oder 2, **dadurch gekennzeichnet, dass** in der Lagerfläche (4) zumindest eine Ausnehmung (8) vorgesehen ist, in denen das Drosselelement (6) angeordnet ist.

4. Lageranordnung nach einem der Ansprüche 1 bis 3, **dadurch gekennzeichnet, dass** das Drosselelement (6) wenigstens teilkreisförmig ausgebildet ist.

5. Lageranordnung nach einem der Ansprüche 1 bis 4, **dadurch gekennzeichnet, dass** das Drosselelement (6) ringförmig ausgebildet ist.

6. Lageranordnung nach einem der Ansprüche 1 bis 5, **dadurch gekennzeichnet, dass** das Drosselelement (6) als Rechteckring ausgebildet ist.

7. Lageranordnung nach einem der Ansprüche 1 bis 6, **dadurch gekennzeichnet, dass** das Drosselelement (6) auf der Welle (2) relativ drehbar zu den Ausnehmungen (8) angeordnet ist.

8. Lageranordnung nach einem der Ansprüche 1 bis 7, **dadurch gekennzeichnet, dass** das Drosselelement (6) außen- und/oder innenumfangsseitig zumindest eine Erhebung (9) und/oder Vertiefung (10) aufweist.

9. Lageranordnung nach einem der Ansprüche 1 bis 8, **dadurch gekennzeichnet, dass** dem Drosselelement (6) ein Federelement zugeordnet ist, welches das Drosselelement (6) an die Welle (2) andrückt.

10. Lageranordnung nach einem der Ansprüche 1 bis 8, **dadurch gekennzeichnet, dass** eine Einrichtung (11) zum Zuführen von Schmiermittel vorgesehen ist.

11. Verwendung der Lageranordnung (1) nach einem der vorherigen Ansprüche zur Lagerung von Nockenwellen, Ausgleichswellen, Schaltwellen oder Getriebewellen.
